# EUROPÄISCHE PATENTSCHRIFT

(11) **EP 1 106 671 B1**
(45) Veröffentlichungstag und Bekanntmachung des Hinweises auf die Patenterteilung: **21.01.2004**
(21) Anmeldenummer: 00125293.1
(22) Anmeldetag: 27.11.2000
(51) Int. Cl.: C09K 19/30

(54) **Flüssigkristallines Medium**
Liquid crystal medium
Milieu liquide cristallin

(30) Priorität: 08.12.1999 DE 19959033
(43) Veröffentlichungstag der Anmeldung: 13.06.2001
(73) Patentinhaber: MERCK PATENT GmbH, 64293 Darmstadt (DE)
(72) Erfinder: Heckmeier, Michael, Dr., 64625 Bensheim (DE); Klement, Dagmar, 64846 Gross-Zimmern (DE); Bremer, Matthias, Dr., 64295 Darmstadt (DE)

(56) Entgegenhaltungen:
- WO-A-89/08633
- DE-A- 19 651 885
- DE-A- 19 809 118

## Beschreibung

Die vorliegende Erfindung betrifft ein flüssigkristallines Medium, sowie dessen Verwendung für elektrooptische Zwecke und dieses Medium enthaltende Anzeigen, insbesondere Anzeigen mit einer Aktivmatrix-Addressierung beruhend auf dem ECB-Effekt.

Das Prinzip der elektrisch kontrollierten Doppelbrechung, der ECB-Effekt ("electrically controlled birefringence") oder auch DAP-Effekt ("Deformation aufgerichteter Phasen") wurde erstmals 1971 beschrieben (M. F. Schieckel and K. Fahrenschon, "Deformation of nematic liquid crystals with vertical orientation in electrical fields", Appl. Phys. Lett. 19 (1971), 3912). Es folgten Arbeiten von J. F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, daß flüssigkristalline Phasen hohe Werte für das Verhältnis der elastischen Konstanten K₃/K₁, hohe Werte für die optische Anisotropie Δn und Werte für die dielektrische Anisotropie Δε von etwa -0,5 bis etwa -5 aufweisen müssen, um für hochinformative Anzeigeelemente basierend auf dem ECB-Effekt eingesetzt werden zu können. auf dem ECB-Effekt basierende elektrooptische Anzeigeelemente weisen eine homöotrope Randorientierung auf.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich wie elektrische Gleich- und Wechselfelder.

Ferner wird von technisch verwendbaren FK-Phasen eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von 2 bis 25, vorzugsweise 3 bis 18 Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie zur Verfügung standen.

Matrix-Flüssigkristallanzeigen sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei man zwei Typen unterscheiden kann:
1. MOS (Metal Oxide Semiconductor) oder andere Dioden auf Silizium-Wafer als Substrat.
2. Dünnfilm-Transistoren (TFT) auf einer Glasplatte als Substrat.

Die Verwendung von einkristallinem Silizium als Substratmaterial beschränkt die Displaygröße, da auch die modulartige Zusammensetzung verschiedener Teildisplays an den Stößen zu Problemen führt.

Bei dem aussichtsreicheren Typ 2, welcher bevorzugt ist, wird als elektrooptischer Effekt üblicherweise der TN-Effekt verwendet. Man unterscheidet zwei Technologien: TFT's aus Verbindungshalbleitern wie z.B. CdSe oder TFT's auf der Basis von polykristallinem oder amorphem Silizium. An letzterer Technologie wird weltweit mit großer Intensität gearbeitet.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, daß je ein Filterelement einem schaltbaren Bildelement gegenüber liegt.

Die TFT-Anzeigen arbeiten üblicherweise als TN-Zellen mit gekreuzten Polarisatoren in Transmission und sind von hinten beleuchtet.

Der Begriff MFK-Anzeigen umfaßt hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen (z. B. Taschenfernseher) oder für hochinformative Displays für Rechneranwendungen (Laptop) und im Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Adressing of Television Liquid Crystal Displays, p. 145 ff, Paris]. Mit abnehmendem Widerstand verschlechtert sich der Kontrast einer MFK-Anzeige und es kann das Problem der "after image elimination" auftreten. Da der spezifische Widerstand der Flüssigkristallmischung durch Wechselwirkung mit den inneren Oberflächen der Anzeige im allgemeinen über die Lebenszeit einer MFK-Anzeige abnimmt, ist ein hoher (Anfangs)-Widerstand sehr wichtig für Anzeigen, die akzeptable Widerstandswerte über eine lange Betriebsdauer aufweisen müssen.

Weiterhin ist es wichtig, daß der spezifische Widerstand eine möglichst geringe Zunahme bei steigender Temperatur sowie nach Temperatur- und/oder UV-Belastung zeigt. Besonders nachteilig sind auch die Tieftemperatureigenschaften der Mischungen aus dem Stand der Technik. Gefordert wird, daß auch bei tiefen Temperaturen keine Kristallisation und/oder smektische Phasen auftreten und die Temperaturabhängigkeit der Viskosität möglichst gering ist. Die MFK-Anzeigen aus dem Stand der Technik genügen somit nicht den heutigen Anforderungen.

Aus EP 0 474 062 sind MFK-Anzeigen basierend auf dem ECB-Effekt bekannt. Die dort beschriebenen FK-Mischungen basierend auf 2,3-Difluorphenyl-Derivaten, welche eine Ester-, Ether- oder Ethylbrücke enthalten, weisen allerdings niedrige Werte der "voltage holding ratio" (HR) nach UV-Belastung auf.

Es besteht somit immer noch ein großer Bedarf nach MFK-Anzeigen mit sehr hohem spezifischen Widerstand bei gleichzeitig großem Arbeitstemperaturbereich, kurzen Schaltzeiten auch bei tiefen Temperaturen und niedriger Schwellenspannung, die die oben beschriebenen Nachteile nicht oder nur in geringem Maße zeigen.

Der Erfindung liegt die Aufgabe zugrunde, MFK-Anzeigen bereitzustellen, welche auf dem ECB-Effekt beruhen, die die oben angegebenen Nachteile nicht oder nur in geringerem Maße, und vorzugsweise gleichzeitig sehr hohe spezifische Widerstände und niedrige Schwellenspannungen aufweisen.

Es wurde nun gefunden, daß diese Aufgabe gelöst werden kann, wenn man in Anzeigen erfindungsgemäße Medien verwendet.

Gegenstand der Erfindung ist somit ein flüssigkristallines Medium auf der Basis eines Gemisches von polaren Verbindungen mit negativer dielektrischer Anisotropie, dadurch gekennzeichnet, daß es eine oder mehrere Verbindungen der allgemeinen Formel I enthält 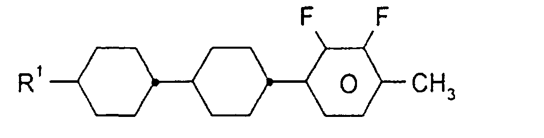 worin R¹ eine Alkoxygruppe mit bis zu 12 C-Atomen bedeutet.

Die erfindungsgemäßen Medien zeigen sehr hohe HR-Werte, niedrige Schwellenspannungen und insbesondere sehr gute Tieftemperaturstabilitäten bei gleichzeitig hohen Klärpunkten

Die Schwellenspannung (Vₒ) der erfindungsgemäßen Medien liegt typischerweise im Bereich von 1,25 bis 2,5 V, bevorzugt im Bereich von 1,5 bis 2,2 V und besonders bevorzugt im Bereich von 1,75 bis 2,05 V.

Der Klärpunkt der erfindungsgemäßen Medien liegt bevorzugt im Bereich von 85 °C bis 120 °C, besonders bevorzugt im Bereich von 70 °C bis 110°C und ganz besonders bevorzugt im Bereich von 80 °C bis 101 °C.

Die HR ist nach 5 min. bei 100 °C, im Bereich von 95 % bis 100 %, bevorzugt 97 % oder höher, besonders bevorzugt 98 % oder höher. Die Medien sind mehr als 500 h, bevorzugt mehr als 1000 h, stabil gegen Lagerung bei -30°C in Testzellen.

Einige bevorzugte Ausführungsformen werden im folgenden genannt:
a) Medium, welches zusätzlich eine oder mehrere Verbindungen der Formel II enthält: 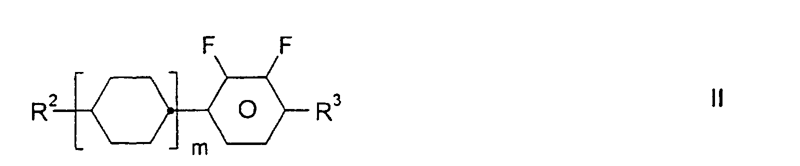 worin
   - m: 1 oder 2 bedeutet und
   - R² und R³: unabhängig voneinander eine Alkyl- oder Alkenylgruppe mit bis zu 12 C-Atomen, worin auch eine oder mehrere nicht benachbarte CH₂-Gruppen durch -O-, -S- und/oder -C≡C- ersetzt sein können.
b) Medium, welches zusätzlich eine oder mehrere Verbindungen der Formel III enthält: 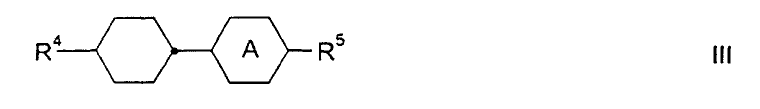 worin Ring A 1,4-trans Cyclohexylen oder 1,4-Phenylen bedeutet und R⁴ und R⁵ unabhängig voneinander eine der für R² angegebenen Bedeutungen besitzen.
c) Medium, welches zusätzlich eine oder mehrere Verbindungen der Formel IV enthält: 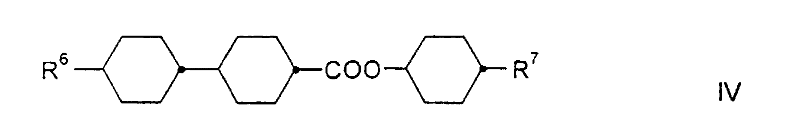 worin R⁶ und R⁷ unabhängig voneinander eine der für R² angegebenen Bedeutungen besitzen.
d) Medium welches eine oder mehrere Verbindungen ausgewählt aus den Formeln lla bis IIe enthält 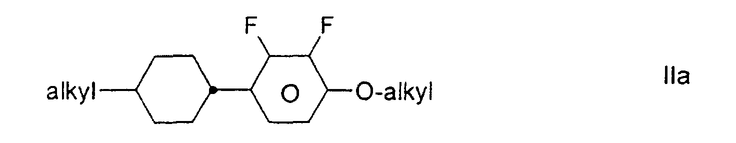 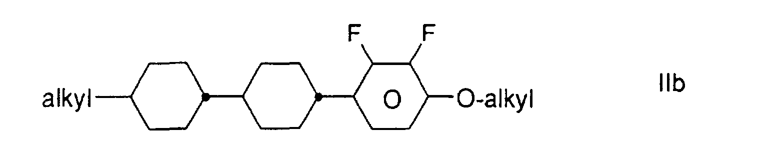 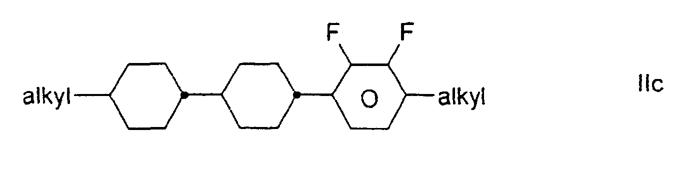 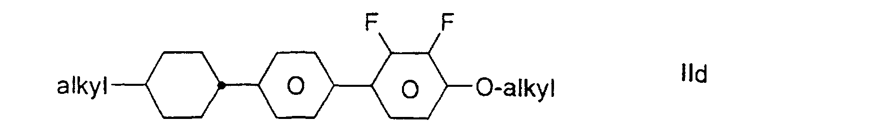 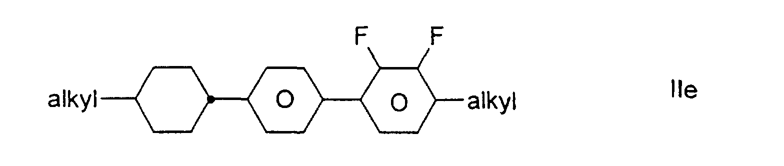 worin alkyl jeweils unabhängig voneinander eine geradkettige Alkylgruppe mit 1 bis 6 C-Atomen bedeutet.
e) Medium welches eine oder mehrere Verbindungen ausgewählt aus den Formeln IIIa bis IIId enthält 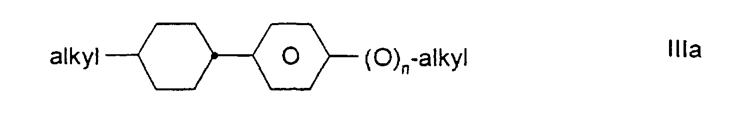 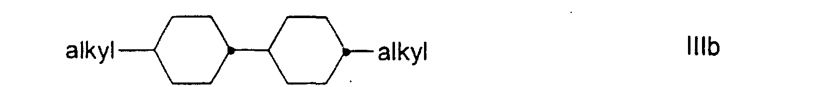 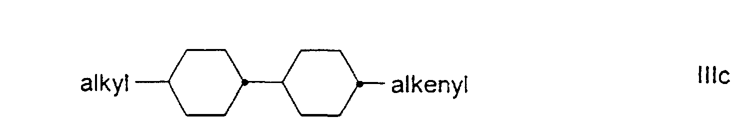 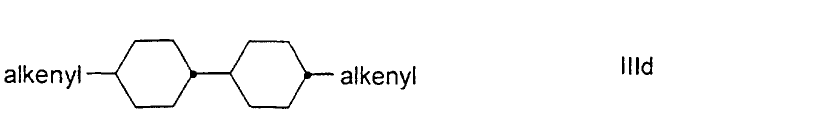 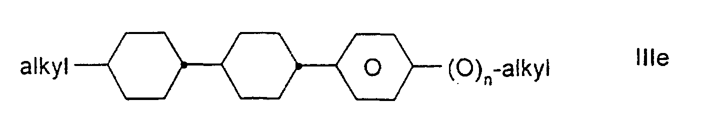 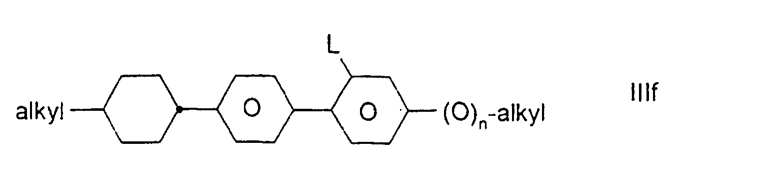 worin alkyl jeweils unabhängig voneinander eine geradkettige Alkylgruppe mit 1 bis 6 C-Atomen, alkenyl eine geradkettige Alkenylgruppe mit 2 bis 6 C-Atomen, n 0 oder 1 und L H oder F bedeuten.
f) Medium, welches im wesentlichen aus 4 oder mehr Verbindungen der Formeln I und II und einer oder mehr Verbindungen der Formel III besteht.
g) Medium, welches mindestens 2, bevorzugt 2 bis 5 Verbindungen der Formel I enthält.
h) Medium, welches mindestens 1 Verbindung der Formel IIa, mindestens eine Verbindung der Formel IIb, und gegebenenfalls zusätzlich mindestens eine Verbindung der Formel IIc enthält.
i) Medium, welches mindestens eine Verbindung der Formel IIIa und/oder IIIb und/oder Ille enthält.
k) Medium, welches mindestens eine Verbindung der Formel IIIc und/oder IIId enthält
l) Medium, welches mindestens eine, bevorzugt 2 bis 5 Verbindungen der Formel IV enthält, worin R⁶ und R⁷ jeweils unabhängig voneinander eine geradkettige Alkylgruppe mit 1 bis 6 C-Atomen bedeuten.
m) Medium, worin der Anteil an Verbindungen der Formel I im Gesamtgemisch mindestens 10 Gew.-%, bevorzugt 10 bis 45 Gew.-%, besonders bevorzugt 15 bis 35 Gew.-% beträgt.
n) Medium, worin der Anteil an Verbindungen der Formel II im Gesamtgemisch mindestens 30 Gew.-%, bevorzugt 30 bis 85 Gew.-%, besonders bevorzugt 40 bis 75 Gew.-% beträgt.
o) Medium, worin der Anteil an Verbindungen der Formel III im Gesamtgemisch mindestens 5 Gew.-%, bevorzugt 5 bis 35 Gew.-%, besonders bevorzugt 7 bis 30 Gew.-% beträgt.
p) Medium, worin der Anteil an Verbindungen der Formel IV im Gesamtgemisch mindestens 3 Gew.-%, bevorzugt 3 bis 25 Gew.-%, besonders bevorzugt 5 bis 20 Gew.-% beträgt.
q) Medium, welches mindestens eine Verbindung der Formel IIIc und/oder IIId enthält, worin alkenyl vinyl, 1E-propenyl, 1E-butenyl, 3E-butenyl oder 3E-pentenyl, insbesondere vinyl oder 1E-propenyl bedeutet.
r) Medium, welches im wesentlichen aus:
   10-45 Gew.-% einer oder mehrerer Verbindungen der Formel I,
   30-85 Gew.-% einer oder mehrerer Verbindungen der Formel II,
   5-35 Gew.-% einer oder mehrerer Verbindungen der Formel III, und
   0-25 Gew.-% einer oder mehrerer Verbindungen der Formel IV
   besteht.

Ein weiterer Gegenstand der Erfindung ist eine elektrooptische Anzeige mit einer Aktivmatrix-Addressierung basierend auf dem ECB-Effekt, dadurch gekennzeichnet, daß sie als Dielektrikum ein flüssigkristallines Medium nach Anspruch 1 enthält.

Vorzugsweise weist die Flüssigkristallmischung einen nematischen Phasenbereich von mindestens 80 K, besonders bevorzugt von mindestens 100 K und eine Fließviskosität von nicht mehr als 30 mm^{2 ·} s⁻¹ bei 20 °C auf.

Die erfindungsgemäße Flüssigkristallmischung weist eine dielektrische Anisotropie Δε von etwa -0,5 bis -7, insbesondere von etwa -3,0 bis -6 bei 20 °C und 1 kHz auf.

Die Doppelbrechung Δn in der Flüssigkristallmischung liegt in der Regel zwischen 0,06 und 0,14, vorzugsweise zwischen 0,07 und 0,12. Die Dielektrizitätskonstante ε_{∥} ist in der Regel größer oder gleich 3, vorzugsweise 3,2 bis 4,5.

Die Dielektrika können auch weitere, dem Fachmann bekannte und in der Literatur beschriebene Zusätze enthalten. Beispielsweise können 0-15 Gew.-% pleochroitische Farbstoffe zugesetzt werden, ferner Leitsalze, vorzugsweise Ethyl-dimethyldodecylammonium-4-hexoxybenzoat, Tetrabutylammoniumtetraphenylborat oder Komplexsalze von Kronenethern (vgl. z.B. Haller et al., Mol. Cryst. Liq. Cryst. 24, 249-258 (1973)) zur Verbesserung der Leitfähigkeit, oder Substanzen zur Veränderung der dielektrischen Anisotropie, der Viskosität und/oder der Orientierung der nematischen Phasen. Derartige Substanzen sind z.B. in DE-A 22 09 127, 22 40 864, 23 21 632, 23 38 281, 24 50 088, 26 37 430 und 28 53 728 beschrieben.

Die einzelnen Komponenten der Formel I, II, III und IV der erfindungsgemäßen Flüssigkristallmischungen sind entwede bekannt, oder ihre Herstellungsweisen sind für den einschlägigen Fachmann aus dem Stand der Technik ohne weiteres abzuleiten, da sie auf ind der Literatur beschriebenen Standardverfahren basieren.

Entsprechende Verbindungen der Formel I und III werden beispielsweise in EP 0 364 538 beschrieben

Entsprechende Verbindungen der Formel II werden beispielsweise in EP 0 122 389 DE 26 36 684 und DE 33 21 373 beschrieben.

Der Begriff "Alkenyl" in Formel II bis IV beinhaltet geradkettiges und verzweigtes Alkenyl mit bis zu 12, vorzugsweise mit 2 bis 7 C-Atomen.

Geradkettige Alkenylgruppen sind bevorzugt. Ferner bevorzugt sind C₂-C₇-1E-Alkenyl, C₄-C₇-3E-Alkenyl, C₅-C₇-4-Alkenyl, C₆-C₇-5-Alkenyl and C₇-6-Alkenyl, insbesondere C₂-C₇-1E-Alkenyl, C₄-C₇-3E-Alkenyl und C₅-C₇-4-Alkenyl.

Von diesen Gruppen besonders bevorzugt sind Vinyl, 1 E-Propenyl, 1 E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl und 6-Heptenyl. Alkenylgruppen mit bis zu 5 C-Atomen sind besonders bevorzugt.

Die nematischen Flüssigkristallmischungen in den erfindungsgemäßen Anzeigen enthaltne in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -0,3. Sie enthält bevorzugt Verbindungen der Formeln I und II.

Der Anteil der Komponente A beträgt vorzugsweise von 50 bis 100 Gew.-%, insbesondere von 60 bis 95 Gew.-%.

Für Komponente A werden vorzugsweise eine oder mehrere Einzelverbindungen gewählt, die einen Wert von Δε ≤ -0,8 haben. Dieser Wert muß umso negativer sein, je kleiner der Anteil von Komponente A an der Gesamtmischung ist.

Die Komponente B weist eine ausgeprägte Nematogenität und eine Fließviskosität von nicht mehr als 30 mm^{2 ·} s⁻¹, vorzugsweise nicht mehr als 25 mm^{2 ·} s⁻¹ bei 20 °C auf.

Besonders bevorzugte Einzelverbindungen der Komponente B sind extrem niedrig viskose nematische Flüssigkristalle mit einer Viskosität von nicht mehr als 18, vorzugsweise nicht mehr als 12 mm^{2 ·} s⁻¹ bei 20 °C.

Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden. Dem Fachmann sind aus der Literatur eine Vielzahl geeigneter Materialien bekannt. Besonders bevorzugt sind Verbindungen der Formel III.

Vorzugsweise enthalten die erfindungsgemäßen Flüssigkristallmischungen 4 bis 25, insbesondere 6 bis 18 Verbindungen der Formeln I, II, III und IV.

Neben den Verbindungen der Formeln I, II, III und IV können auch noch andere Bestandteile zugegen sein, z.B. in einer Menge von bis zu 45 Gew.-% der Gesamtmischung, vorzugsweise jedoch bis zu maximal 35 Gew.-%, insbesondere bis zu maximal 10 Gew.-%.

Die anderen Bestandteile werden vorzugsweise ausgewählt aus den nematischen oder nematogenen Substanzen, insbesondere den bekannten Substanzen aus den Klassen der Azoxybenzole, Benzylidenaniline, Biphenyle, Terphenyle, Phenyl oder Cyclohexylbenzoate, Cyclohexancarbonsäurephenyl oder -cyclohexylester, Phenylcyclohexane, Cyclohexylbiphenyle, Cyclohexylcyclohexane, Cyclohexylnaphthaline, 1,4-Bis-cyclohexylbiphenyle oder Cyclohexylpyrimidine, Phenyl- oder Cyclohexyldioxane, gegebenenfalls halogenierten Stilbene, Benzylphenylether, Tolane und substituierten Zimtsäuren.

Die wichtigsten als Bestandteile derartiger Flüssigkristallmischungen in Frage kommenden Verbindungen lassen sich durch die Formel V charakterisieren

R⁸-L-G-E-R⁹ V

worin
L und E jeweils ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,
G

| | |
|---|---|
| - CH=CH- | -N(O)=N- |
| - CH-CQ- | -CH=N(O)- |
| -C≡C- | -CH₂-CH₂- |
| - CO-O- | -CH₂-O- |
| -CO-S- | -CH₂-S- |
| - CH=N- | -COO-Phe-COO- |

oder eine C-C-Einfachbindung,
Q Halogen, vorzugsweise Chlor, oder CN, und
R⁸ und R⁹ jeweils unabhängig voneinander Alkyl, Alkoxy, Alkanoyloxy oder Alkoxycarbonyloxy mit bis zu 18, vorzugsweise bis zu 8 C-Atomen, oder einer dieser Reste auch CN, NC, NO₂, CF₃, F, Cl oder Br bedeuten.

Bei den meisten dieser Verbindungen sind R⁸ und R⁹ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, daß die erfindungsgemäße ECB-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-A 0 240 379 beschrieben wird.

Die folgenden Beispiele sollen die Erfindung erläutern, ohne sie zu begrenzen. Vor- und nachstehend bedeuten Prozentangaben Gewichtsprozent, sofern nicht anders angegeben; alle Temperaturen sind in Grad Celsius angegeben.

Vorzugsweise enthalten die erfindungsgemäßen Flüssigkristallmischungen neben den Verbindungen der Formel I eine oder mehrere der nachfolgend genannten Verbindungen

Folgende Abkürzungen werden verwendet:

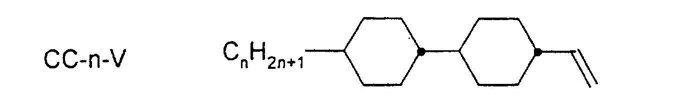

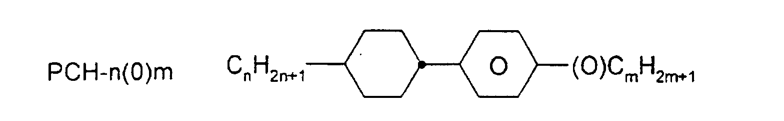

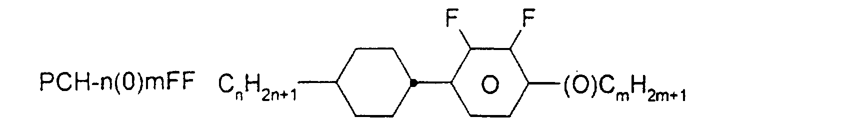

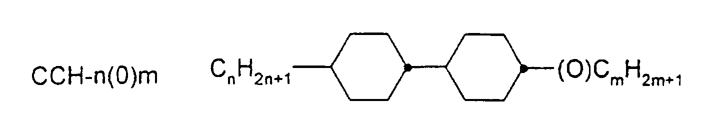

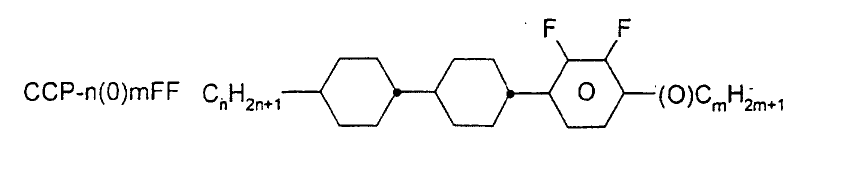

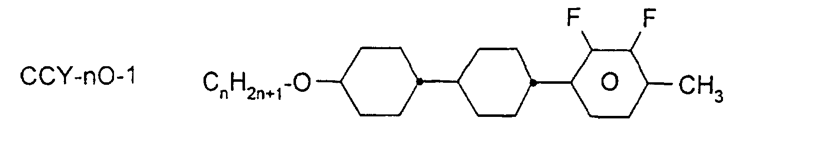

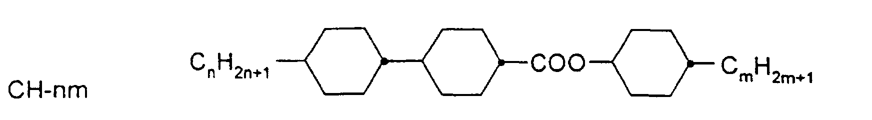

Die angegeben Spannungswerte V₀, V₁₀, V₉₀ wurden in einer üblichen ECB-Zelle mit einer Schichtdicke von 5 µm bei 20 °C gemessen.

Weiterhin bedeuten:
- S-N: Phasenübergang kristallin - nematisch [°C]
- cp: Klärpunkt [°C]
- Δn: optische Anisotropie (Doppelbrechung) bei 20 °C und 589 nm
- Δε: dielektrische Anisotropie bei 20 °C und 1 kHz
- ε_{∥}: Dielektrizitätskonstante parallel zur Moleküllängsachse bei 20 °C und 1 kHz
- K₃/K₁: Verhältnis der elastischen Konstanten K₃ und K₁
- γ₁: Rotationsviskosität [mPa^{·}s] (bei 20 °C, sofern nicht anders angegeben)
- V₀: Spannung [V] bei 0 % Transmission

Die zur Messung der Schwellenspannung verwendete Anzeige weist zwei planparallele Trägerplatten im Abstand von 5 µm und Elektrodenschichten mit darüberliegenden Orientierungsschichten aus Lecithin auf den Innenseiten der Trägerplatten auf, welche eine homöotrope Randorientierung der Flüssigkristallmoleküle bewirken.

### Beispiel 1

Eine Flüssigkristallanzeige enthaltend

| | | | |
|---|---|---|---|
| CC-5-V | 7.00 % | S-N | < - 30,0 |
| PCH-304FF | 10.00 % | cp. | + 102,0 |
| PCH-504FF | 9.00 % | Δn | 0,0920 |
| CCP-202FF | 9.00 % | Δε | - 5,3 |
| CCP-302FF | 9.00 % | ε_{∥} | 3,7 |
| CCP-502FF | 9.00 % | K₃/K₁ | 1,11 |
| CCP-21FF | 11.00% | V₀ | 2,03 |
| CCP-31FF | 10.00 % | | |
| CCY-2O-1 | 13.00 % | | |
| CCY-4O-1 | 13.00 % | | |

### Beispiel 2

Eine Flüssigkristallanzeige enthaltend

| | | | |
|---|---|---|---|
| CCH-34 | 6.00 % | S-N | < - 40,0 |
| CCH-35 | 3.00% | cp. | + 91,5 |
| CCH-301 | 9.00 % | Δn | 0,0767 |
| CCH-501 | 7.00% | Δε | -4,1 |
| PCH-304FF | 10.00 % | ε_{∥} | 3,5 |
| PCH-504FF | 10.00 % | K₃/K₁ | 0,99 |
| CCP-202FF | 10.00 % | V₀ | 2,06 |
| CCP-302FF | 10.00 % | | |
| CCP-502FF | 9.00 % | | |
| CCY-20-1 | 6.00 % | | 2,03 |
| CCY-30-1 | 4.00 % | | |
| CCY-4O-1 | 7.00 % | | |
| CH-33 | 3.00 % | | |
| CH-35 | 3.00 % | | |
| CH-43 | 3.00 % | | |

### Beispiel 3

Eine Flüssigkristallanzeige enthaltend

| | | | |
|---|---|---|---|
| PCH-53 | 9.00 % | S-N | < - 40,0 |
| PCH-304FF | 11.00% | cp. | + 91,5 |
| PCH-504FF | 10.00 % | Δn | 0,0935 |
| CCP-202FF | 10.00 % | Δε | - 5,2 |
| CCP-302FF | 10.00 % | ε_{∥} | 3,7 |
| CCP-502FF | 10.00 % | K₃/K₁ | 1,12 |
| CCP-21FF | 10.00 % | V₀ | 1,98 |
| CCP-31FF | 10.00 % | | |
| CCY-2O-1 | 10.00 % | | |
| CCY-4O-1 | 10.00 % | | |

### Beispiel 4

Eine Flüssigkristallanzeige enthaltend

| | | | |
|---|---|---|---|
| PCH-53 | 10.00 % | S-N | < - 40,0 |
| PCH-304FF | 14.00 % | cp. | + 70,5 |
| PCH-502FF | 6.00 % | Δn | 0,0883 |
| PCH-504FF | 12.00 % | Δε | - 5,2 |
| CCP-202FF | 8.00 % | ε_{∥} | 4,1 |
| CCP-302FF | 8.00 % | K₃/K₁ | 1,01 |
| CCP-502FF | 6.00 % | V₀ | 1,76 |
| CCP-21 FF | 7.00 % | | |
| CCP-31FF | 7.00 % | | |
| CCY-2O-1 | 8.00 % | | |
| CCY-3O-1 | 6.00 % | | |
| CCY-4O-1 | 8.00 % | | |

## Patentansprüche

1. Flüssigkristallines Medium auf der Basis eines Gemisches von polaren Verbindungen mit negativer dielektrischer Anisotropie, **dadurch gekennzeichnet, daß** es eine oder mehrere Verbindungen der allgemeinen Formel I enthält 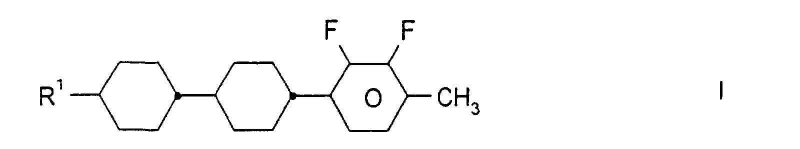 worin R¹ eine Alkoxygruppe mit bis zu 12 C-Atomen bedeutet.

2. Medium nach Anspruch 1, **dadurch gekennzeichnet, daß** es zusätzlich eine oder mehrere Verbindungen der Formel II enthält 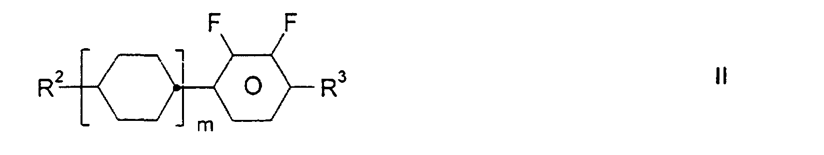 worin
m 1 oder 2 bedeutet und
R² und R³ unabhängig voneinander eine Alkyl- oder Alkenylgruppe mit bis zu 12 C-Atomen, worin auch eine oder mehrere nicht benachbarte CH₂-Gruppen durch -O-, -S- und/oder -C≡C- ersetzt sein können.

3. Medium nach Anspruch 1 oder 2, **dadurch gekennzeichnet, daß** es zusätzlich eine oder mehrere Verbindungen der Formel III enthält 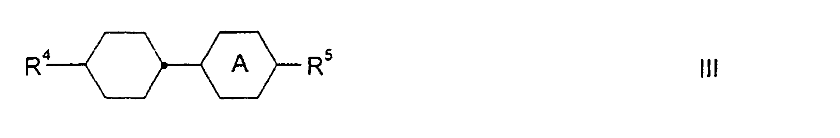 worin Ring A 1,4-trans Cyclohexylen oder 1,4-Phenylen bedeutet und R⁴ und R⁵ unabhängig voneinander eine der für R² angegebenen Bedeutungen besitzen.

4. Medium nach einem der Ansprüche 1 bis 3, **dadurch gekennzeichnet, daß** es zusätzlich eine oder mehrere Verbindungen der Formel IV enthält 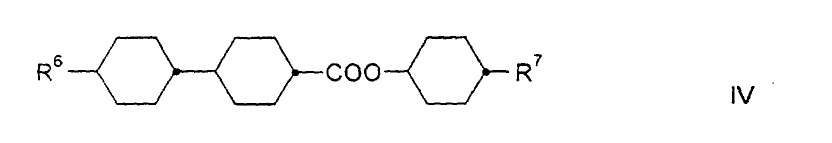 worin R⁶ und R⁷ unabhängig voneinander eine der für R² angegebenen Bedeutungen besitzen.

5. Medium nach einem der Ansprüche 1 bis 4, **dadurch gekennzeichnet, daß** es eine oder mehrere Verbindungen ausgewählt aus den Formeln lla bis IIe enthält 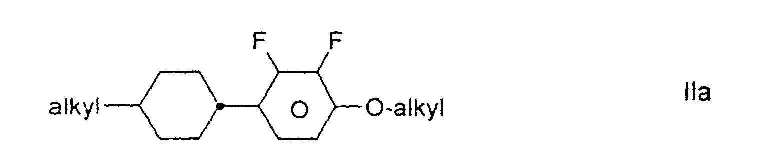 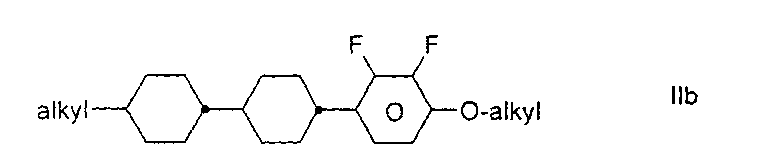 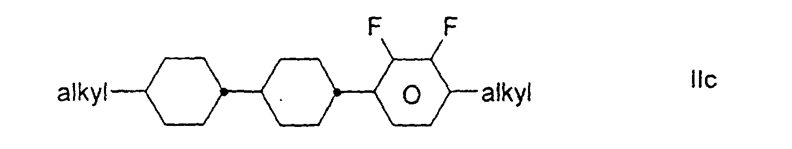 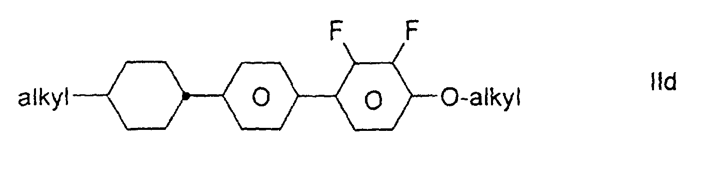 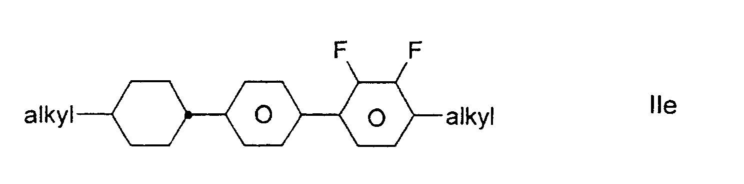 worin alkyl jeweils unabhängig voneinander eine geradkettige Alkylgruppe mit 1 bis 6 C-Atomen bedeutet.

6. Medium nach einem der Ansprüche 1 bis 5, **dadurch gekennzeichnet, daß** es eine oder mehrere Verbindungen ausgewählt aus den Formeln IIIa bis IIId enthält 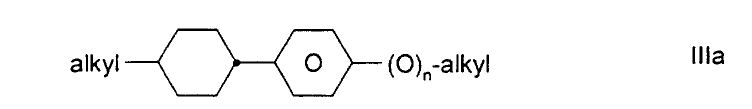 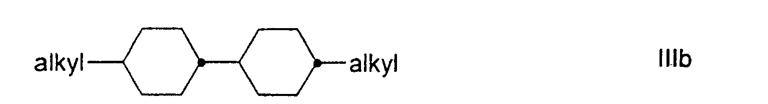 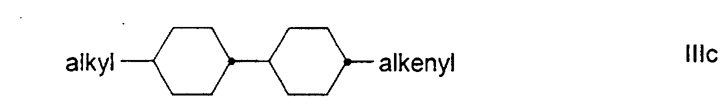 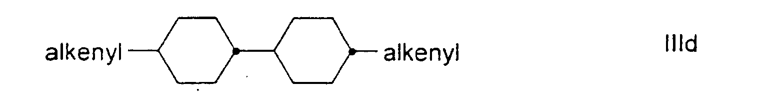 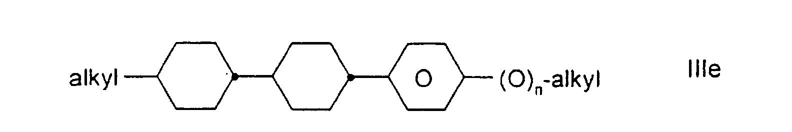 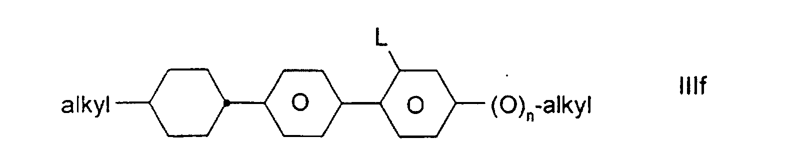 worin alkyl jeweils unabhängig voneinander eine geradkettige Alkylgruppe mit 1 bis 6 C-Atomen, alkenyl eine geradkettige Alkenylgruppe mit 2 bis 6 C-Atomen, n 0 oder 1 und L H oder F bedeuten.

7. Medium nach einem der Ansprüche 1 bis 6, **dadurch gekennzeichnet, daß** es im wesentlichen aus 4 oder mehr Verbindungen der Formeln I und II und einer oder mehr Verbindungen der Formel III besteht.

8. Medium nach einem der Ansprüche 1 bis 7, **dadurch gekennzeichnet, daß** der Anteil an Verbindungen der Formel I im Gesamtgemisch mindestens 10 Gew.-% beträgt.

9. Medium nach einem der Ansprüche 1 bis 8, **dadurch gekennzeichnet, daß** der Anteil an Verbindungen der Formel II im Gesamtgemisch mindestens 30 Gew.-% beträgt.

10. Medium nach einem der Ansprüche 1 bis 9, **dadurch gekennzeichnet, daß** der Anteil an Verbindungen der Formel III im Gesamtgemisch mindestens 5 Gew.-% beträgt.

11. Medium nach einem der Ansprüche 1 bis 10, **dadurch gekennzeichnet, daß** es im wesentlichen aus
10-45 Gew.-% einer oder mehrerer Verbindungen der Formel I,
30-85 Gew.-% einer oder mehrerer Verbindungen der Formel II,
5-35 Gew.-% einer oder mehrerer Verbindungen der Formel III, und
0-25 Gew.-% einer oder mehrerer Verbindungen der Formel IV besteht.

12. Elektrooptische Anzeige mit einer Aktivmatrix-Addressierung basierend auf dem ECB-Effekt, **dadurch gekennzeichnet, daß** sie als Dielektrikum ein flüssigkristallines Medium nach einem der Ansprüche 1 bis 11 enthält.

## Claims

1. Liquid-crystalline medium based on a mixture of polar compounds having negative dielectric anisotropy, **characterised in that** it comprises one or more compounds of the general formula I 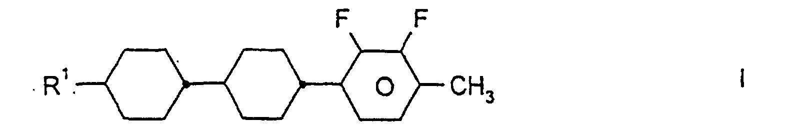 in which R¹ denotes an alkoxy group having up to 12 C atoms.

2. Medium according to Claim 1, **characterised in that** it additionally comprises one or more compounds of the formula II 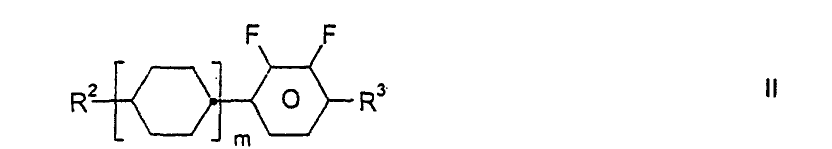 in which
m denotes 1 or 2, and
R² and R³, independently of one another denote an alkyl or alkenyl group having up to 12 C atoms, in which, in addition, one or more non-adjacent CH₂ groups may be replaced by -O-, -S- and/or -C≡C-.

3. Medium according to Claim 1 or 2, **characterised in that** it additionally comprises one or more compounds of the formula III 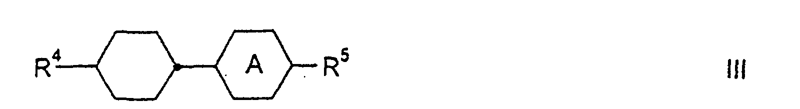 in which ring A denotes 1,4-trans-cyclohexylene or 1,4-phenylene, and R⁴ and R⁵, independently of one another, have one of the meanings indicated for R².

4. Medium according to one of Claims 1 to 3, **characterised in that** it additionally comprises one or more compounds of the formula IV 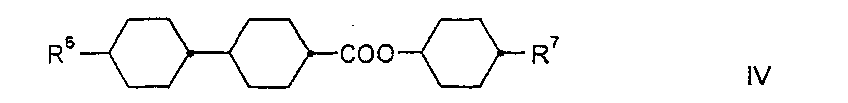 in which R⁶ and R⁷, independently of one another, have one of the meanings indicated for R².

5. Medium according to one of Claims 1 to 4, **characterised in that** it comprises one or more compounds selected from the formulae IIa to IIe 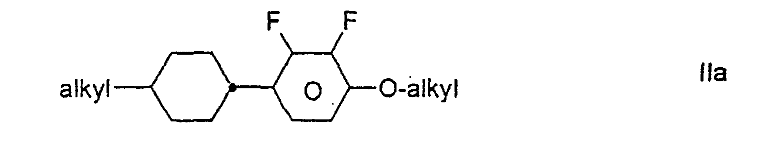 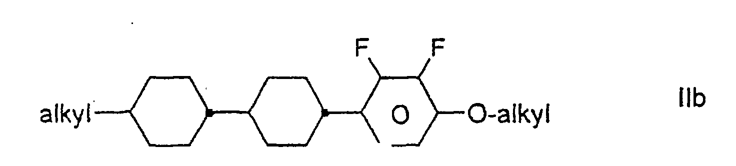 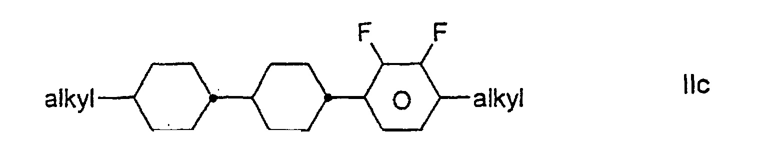 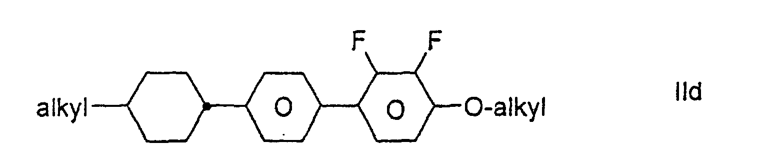 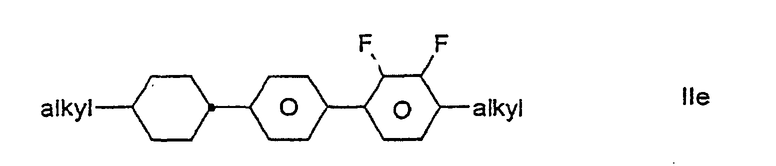 in which alkyl in each case, independently of one another, denotes a straight-chain alkyl group having 1 to 6 C atoms.

6. Medium according to one of Claims 1 to 5, **characterised in that** it comprises one or more compounds selected from the formulae IIIa to IIId 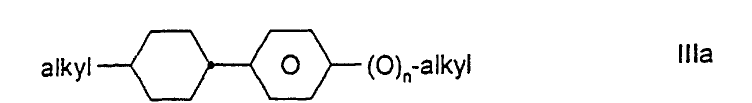 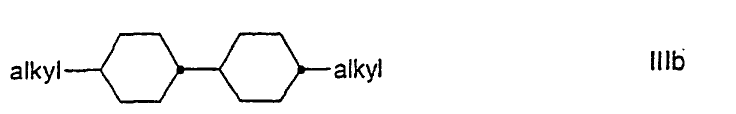 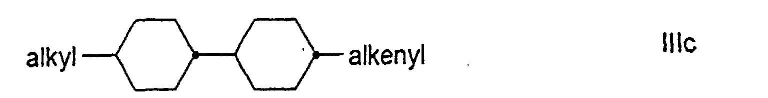 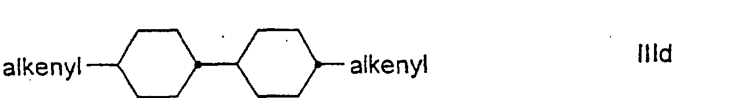 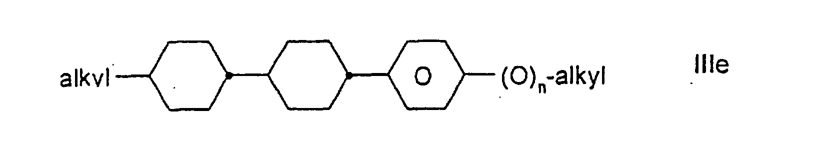 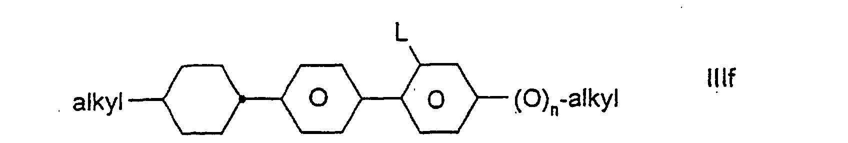 in which alkyl in each case, independently of one another, denotes a straight-chain alkyl group having 1 to 6 C atoms, alkenyl denotes a straight-chain alkenyl group having 2 to 6 C atoms, n denotes 0 or 1, and L denotes H or F.

7. Medium according to one of Claims 1 to 6, **characterised in that** it essentially consists of 4 or more compounds of the formulae I and II and one or more compounds of the formula III.

8. Medium according to one of Claims 1 to 7, **characterised in that** the proportion of compounds of the formula I in the mixture as a whole is at least 10% by weight.

9. Medium according to one of Claims 1 to 8, **characterised in that** the proportion of compounds of the formula II in the mixture as a whole is at least 30% by weight.

10. Medium according to one of Claims 1 to 9, **characterised in that** the proportion of compounds of the formula III in the mixture as a whole is at least 5% by weight.

11. Medium according to one of Claims 1 to 10, **characterised in that** it essentially consists of
10-45% by weight of one or more compounds of the formula I,
30-85% by weight of one or more compounds of the formula II,
5-35% by weight of one or more compounds of the formula III, and
0-25% by weight of one or more compounds of the formula IV.

12. Electro-optical display having active-matrix addressing based on the ECB effect, **characterised in that** it contains, as dielectric, a liquid-crystalline medium according to one of Claims 1 to 11.

## Revendications

1. Milieu de type cristaux liquides, à base d'un mélange de composés polaires avec anisotropie diélectrique négative, **caractérisé en ce qu'**il contient un ou plusieurs composés de la formule générale I : 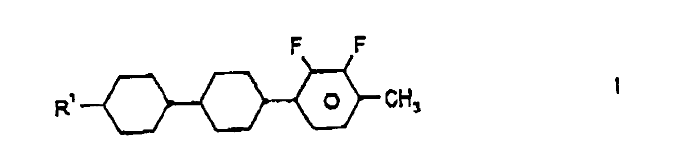 où R¹ représente un radical alcoxy ayant jusqu'à 12 atomes C.

2. Milieu selon la revendication 1, **caractérisé en ce qu'**il contient en outre, un ou plusieurs composés de la formule II : 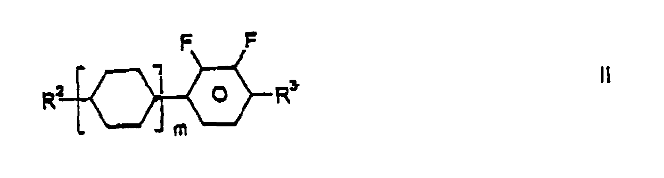 où
m représente 1 ou 2, et R² et R³ représentent indépendamment l'un de l'autre, un radical alkyle ou alcényle ayant jusqu'à 12 atomes C, où également, un ou plusieurs radicaux CH₂ non voisins peuvent être remplacés par -O-, -S- et/ou -C≡C-.

3. Milieu selon la revendication 1 ou 2, **caractérisé en ce qu'**il contient en outre, un ou plusieurs composés de la formule III : 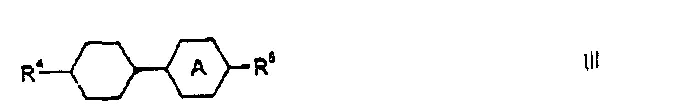 où le cycle A représente un radical 1,4-trans-cyclohexylène ou 1,4-phénylène, et
R⁴ et R⁵ possèdent indépendamment l'un de l'autre, une des significations données pour R².

4. Milieu selon l'une quelconque des revendications 1 à 3, **caractérisé en ce qu'**il contient en outre, un ou plusieurs composés de la formule IV : 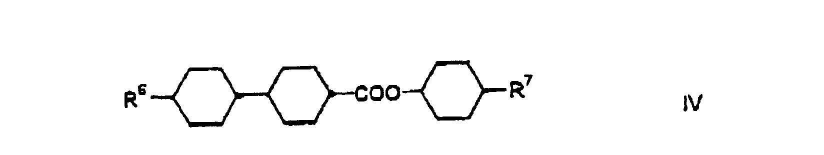 où R⁶ et R⁷ possèdent indépendamment l'un de l'autre, une des significations données pour R².

5. Milieu selon l'une quelconque des revendications 1 à 4, **caractérisé en ce qu'**il contient un ou plusieurs composés choisis parmi les formules IIa à IIe : 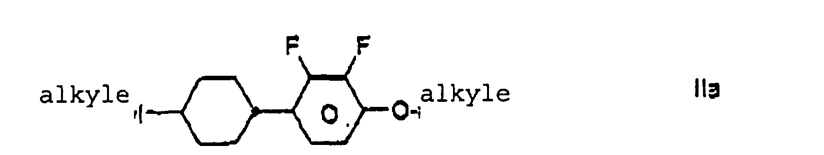 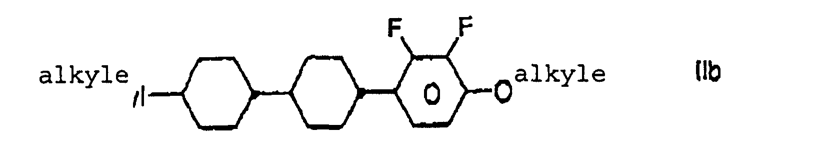 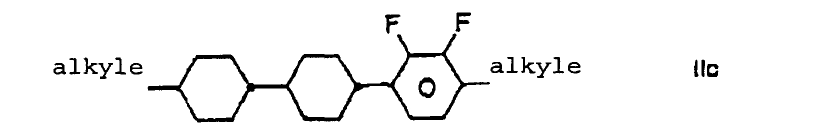 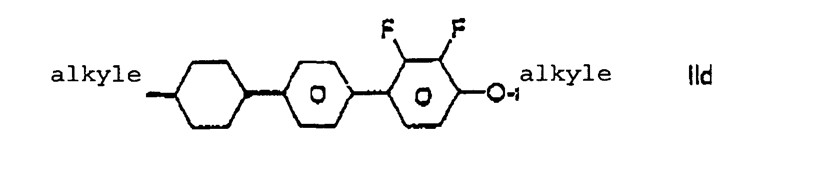 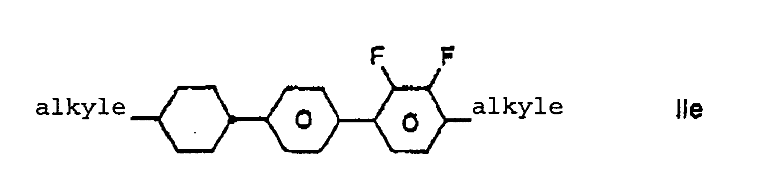 où alkyle représente chaque fois, indépendamment l'un de l'autre, un radical alkyle linéaire ayant 1 à 6 atomes C.

6. Milieu selon l'une quelconque des revendications 1 à 5, **caractérisé en ce qu'**il contient un ou plusieurs composés choisis parmi les formules IIIa à IIId : 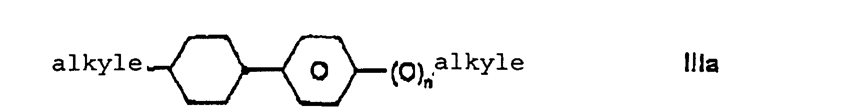 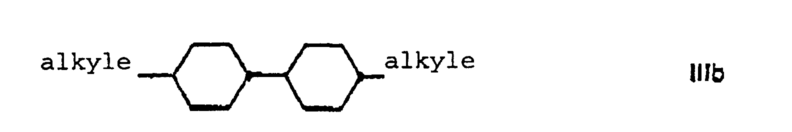 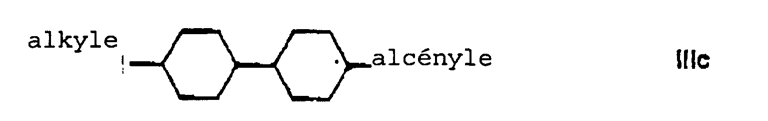 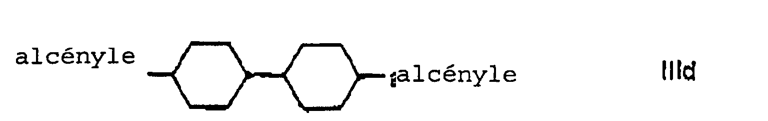 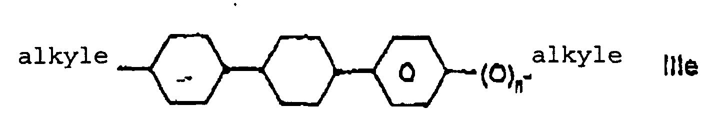 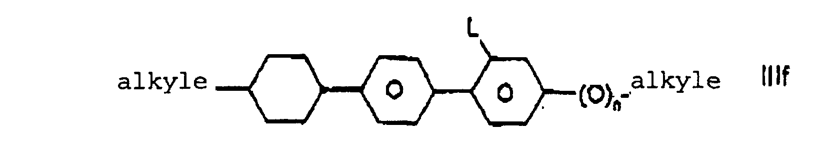 où alkyle représente chaque fois, indépendamment l'un de l'autre, un radical alkyle linéaire ayant 1 à 6 atomes C, un radical alcényle linéaire ayant 2 à 6 atomes C, n représente 0 ou 1 et L, H ou F.

7. Milieu selon l'une quelconque des revendications 1 à 6, **caractérisé en ce qu'**il consiste essentiellement en 4 composés des formules I et II, ou plus, et en un ou plusieurs composés de la formule III.

8. Milieu selon l'une quelconque des revendications 1 à 7, **caractérisé en ce que** la proportion des composés de la formule I s'élève à au moins 10% en poids dans le mélange complet.

9. Milieu selon l'une quelconque des revendications 1 à 8, **caractérisé en ce que** la proportion des composés de la formule II s'élève à au moins 30% en poids dans le mélange complet.

10. Milieu selon l'une quelconque des revendications 1 à 9, **caractérisé en ce que** la proportion des composés de la formule III s'élève à au moins 5% en poids dans le mélange complet.

11. Milieu selon l'une quelconque des revendications 1 à 10, **caractérisé en ce qu'**il consiste essentiellement en :
10-45% en poids d'un ou de plusieurs composés de la formule I ;
30-85% en poids d'un ou de plusieurs composés de la formule II ;
5-35% en poids d'un ou de plusieurs composés de la formule III, et
0-25% en poids d'un ou de plusieurs composés de la formule IV.

12. Indication électro-optique avec un adressage à matrice active, basé sur l'effet ECB, **caractérisée en ce qu'**elle contient comme diélectrique, un milieu de type cristaux liquides selon l'une quelconque des revendications 1 à 11.
